# EUROPÄISCHE PATENTANMELDUNG

(11) **EP 2 708 348 A1**
(43) Veröffentlichungstag der Anmeldung: **19.03.2014**
(21) Anmeldenummer: 13182901.2
(22) Anmeldetag: 04.09.2013
(51) Int. Cl.: B29C 67/00, B29C 35/16, B22F 3/105

(54) **Verfahren und Vorrichtung zur schichtweisen Herstellung von verzugsarmen dreidimensionalen Objekten mittels Kühlelementen**

(30) Priorität: 17.09.2012 DE 102012216515
(71) Anmelder: Evonik Industries AG, 45128 Essen (DE)
(72) Erfinder: Grebe, Maik, 44805 Bochum (DE); Diekmann, Wolfgang, 45731 Waltrop (DE); Hessel-Geldmann, Sigrid, 45721 Haltern am See (DE); Kreutz, Juergen, 45772 Marl (DE)

(57) **Zusammenfassung**

Vorrichtung zur gleichzeitigen schichtweisen Herstellung von dreidimensionalen Objekten (15) und Kühlelementen (21), Verfahren zur schichtweisen Herstellung sowie entsprechende Formkörper.

## Beschreibung

Die vorliegende Erfindung betrifft eine Vorrichtung zur schichtweisen Herstellung von dreidimensionalen Objekten, Verfahren zur schichtweisen Herstellung sowie entsprechende Formkörper.

Die zügige Bereitstellung von Prototypen ist eine in der jüngsten Zeit häufig gestellte Aufgabe. Verfahren, die dies ermöglichen, werden Rapid Prototyping, Rapid Manufacturing oder auch Additive Fabrication-Verfahren genannt. Besonders geeignet sind Verfahren, die auf der Basis von pulverförmigen Werkstoffen arbeiten, und bei denen schichtweise durch selektives Aufschmelzen und Verfestigen die gewünschten Strukturen hergestellt werden. Auf Stützkonstruktionen bei Überhängen und Hinterschnitten kann dabei verzichtet werden, da die die aufgeschmolzenen Bereiche umgebende Baufeldebene ausreichende Stützwirkung bietet. Ebenso entfällt die Nacharbeit, Stützen zu entfernen. Die Verfahren sind auch für die Herstellung von Kleinserien geeignet. Die Bauraumtemperatur wird so gewählt, dass es während des Bauprozesses zu keinem Verzug der schichtweise hergestellten Strukturen kommt.

Ein Verfahren, welches besonders gut für den Zweck des Rapid Prototypings geeignet ist, ist das selektive Laser-Sintern (SLS). Bei diesem Verfahren werden Kunststoffpulver in einer Kammer selektiv kurz mit einem Laserstrahl belichtet, wodurch die Pulver-Partikel, die von dem Laserstrahl getroffen werden, schmelzen. Die geschmolzenen Partikel laufen ineinander und erstarren schnell wieder zu einer festen Masse. Durch wiederholtes Belichten von immer neu aufgebrachten Schichten können mit diesem Verfahren dreidimensionale Körper einfach und schnell hergestellt werden.

Das Verfahren des Laser-Sinterns (Rapid Prototyping) zur Darstellung von Formkörpern aus pulverförmigen Polymeren wird ausführlich in der Patentschriften US 6,136,948 und WO 96/06881 (beide DTM Corporation) beschrieben. Eine Vielzahl von Polymeren und Copolymeren wird für diese Anwendung beansprucht, wie z.B. Polyacetat, Polypropylen, Polyethylen, lonomere und Polyamid.

Andere gut geeignete Verfahren sind das SIV-Verfahren (Selektive Verbindungsinhibition) wie in WO 01/38061 beschrieben, oder ein Verfahren wie in EP 1015214 beschrieben. Beide Verfahren arbeiten mit einer flächigen Infrarotheizung zum Aufschmelzen des Pulvers. Die Selektivität des Aufschmelzens wird bei ersterem durch die Auftragung eines Inhibitors, beim zweiten Verfahren durch eine Maske erreicht. Ein weiteres Verfahren ist in US 2004/232583 A1 beschrieben. Bei diesem wird die zum Verschmelzen benötigte Energie durch einen Mikrowellengenerator eingebracht, wobei die Selektivität durch Auftragen eines Suszeptors erreicht wird. Die Schrift WO 2005/105412 beschreibt ein Verfahren, bei dem die zum Verschmelzen benötigte Energie durch elektromagnetische Strahlung eingebracht wird, wobei ebenfalls wieder die Selektivität durch Auftragen eines Absorbers erreicht wird.

Ein Problem bei den aus dem Stand der Technik bekannten Verfahren ist, dass die im Pulverkuchen befindlichen Teile ungleichmäßig abkühlen. Das Zentrum des Pulverkuchens kühlt naturgemäß deutlich später ab als der Außenbereich (Ränder). Verstärkt wird dieser Effekt noch durch die schlechte Wärmeleitfähigkeit der vorliegenden Schüttung aus Polymerpulver. Die großen Temperaturunterschiede innerhalb des Pulverkuchens führen zu einem Verzug der Bauteile. Zudem wird das Pulver im Zentrum des Pulverkuchens durch das langsame Abkühlen des Zentrums eines Pulverkuchens thermisch stark belastet. Um den Verzug der schichtweise hergestellten Bauteile zu minimieren, wird nach dem bisherigen Stand der Technik der Pulverkuchen möglichst langsam abgekühlt. Dies geschieht durch eine Isolierung oder zusätzliche Heizung, welche um des Baubehälters montiert wird. Eine weitere Ausführungsform nach Stand der Technik ist das Abkühlen des Baubehälters in einer entsprechend temperierten Kammer. Der Verzug der Bauteile wird dadurch reduziert, aber die Abkühlzeit wird ebenso deutlich erhöht und somit auch die thermische Belastung des Polymerpulvers.

In DE 102007009273 wird beschrieben, wie der Pulverkuchen abgekühlt werden kann. Die Abkühlung erfolgt durch zumindest teilweises Durchströmen des Schichtkuchens von einem Fluid. Hierbei werden sowohl Kern- als auch Randzonen abgekühlt. Durch das gleichzeitige, undifferenzierte Durchströmen von Kern- und Ranzonen sind zunächst die Randzonen abgekühlt, so dass ein Verzug im zu erstellenden Objekt auftreten kann. Für die Vorgehensweise ist eine aufwändige Steuerelektronik notwendig. Zudem ist eine Kontamination des Pulverkuchens und des erstellten Objekts möglich.

Aufgabe der vorliegenden Erfindung ist daher, den Verzug von Bauteilen zu minimieren, indem der Pulverkuchen gleichmäßig und/oder definiert abkühlt. Die Abkühlung soll gleichmäßig sowohl im Außenbereich als auch im Zentrum des Pulverkuchens erfolgen. Dabei soll zusätzlich die Abkühlzeit und die thermische Belastung des Polymerpulvers reduziert werden. Dies soll möglichst ohne Verunreinigung des Pulverkuchens durch ein Fluid und ohne aufwendige Steuerungs- und Regelungstechnik realisiert werden.

Die genannte Aufgabe wird durch Vorrichtungen gemäß der vorliegenden Erfindung gelöst. Ein erster Gegenstand der vorliegenden Erfindung ist eine Vorrichtung (1) zur schichtweisen Herstellung von dreidimensionalen Objekten umfassend einen Bauraum (20) mit einer höheneinstellbaren Bauplattform (16), einer Vorrichtung (17) zum Aufbringen einer Schicht eines durch Einwirkung elektromagnetischer Strahlung verfestigbaren Materials auf die Bauplattform (16), einer Bestrahlungseinrichtung umfassend eine elektromagnetische Strahlung emittierende Strahlungsquelle (11), eine Steuerungseinheit (13) und eine im Strahlengang der elektromagnetischen Strahlung befindliche Linse (18) zum Bestrahlen von dem mindestens einen Objekt (15) entsprechenden Stellen der Schicht. In der Vorrichtung (1) ist mindestens ein Kühlelement (21) gleichzeitig mit dem zu erstellenden Objekt (15) herstellbar. Vorzugsweise enthält das Kühlelement (21) ein Kühlmittel. In einer bevorzugten Ausführungsform wird das Kühlelement (21) in den Pulverkuchen (23) integriert.

Das Kühlelement (21) und das Objekt (15) sind zwei voneinander getrennte oder trennbare Objekte.

Durch die erfindungsgemäße Vorrichtung (1) wird ein definiertes Abkühlen des Objekts (15) bewirkt.

Es hat sich überraschend gezeigt, dass mit Vorrichtungen (1) gemäß der vorliegenden Erfindung ein gleichmäßiges Abkühlen von Rand- und Kernzone des Pulverkuchens nach Erstellung des Objekts (15) und des Kühlelements (21) zu erreichen ist, ohne das der Pulverkuchen durch ein Fluid verunreinigt oder eine aufwendige Steuer- und Regelungstechnik benötigt wird.

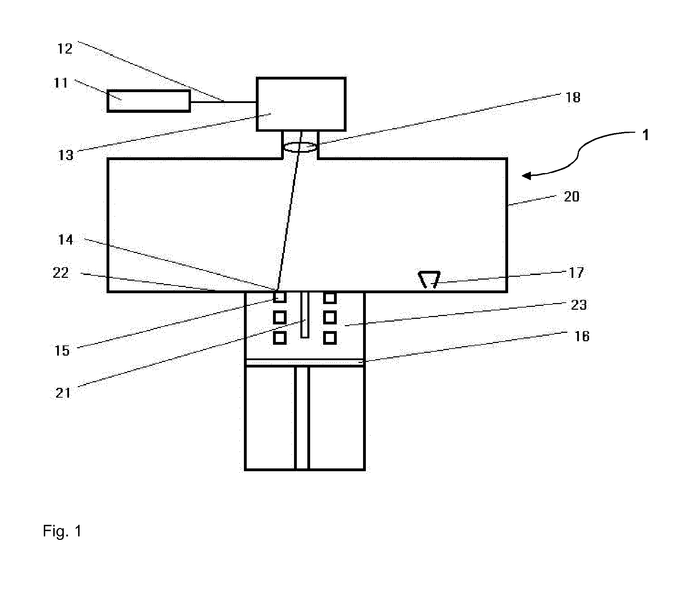

Fig. 1 zeigt den prinzipiellen Aufbau einer Vorrichtung (1) zur Herstellung von dreidimensionalen Objekten gemäß der vorliegenden Erfindung. Das Bauteil wird beispielsweise zentral im Baufeld positioniert. Aus einem Laser (11) wird der Laserstrahl (12) mittels eines Scansystems (13) durch die Linse (18) auf eine temperierte und inertisierte, vorzugsweise mit Stickstoff inertisierte, Pulveroberfläche (14) des zu bildenden Objekts (15) gelenkt. Die Linse hat dabei die Aufgabe, die restlichen optischen Komponenten wie z. B die Spiegel des Scanners von der Bauraumatmosphäre zu trennen. Oft wird die Linse als F-Theta Linsensystem ausgeführt, um einen möglichst homogenen Fokus über dem gesamten Arbeitsfeld zu gewährleisten. Innerhalb des Bauraums befindet sich die Aufbringvorrichtung (17) zum Aufbringen des zu verfestigenden Materials auf die Bauplattform (16). Das Kühlelement (21) ist im Pulverkuchen integriert und dient der definierten Abkühlung des Pulverkuchens. Das Kühlelement (21) besteht vorzugsweise aus einem Hohlkörper, der bevorzugt ein Verhältnis von Wandstärke zu Querschnitt kleiner 0,3 hat. Das mindestens eine Kühlelement (21) ist vorzugsweise 5 bis 100 mm, bevorzugt 10 bis 50 mm von dem Objekt (15) entfernt positioniert. Das Kühlelement (21) wird mittels des schichtweisen Verfahrens gebaut und besteht aus geschmolzenen bzw. versinterten Polymerpulver. Über die Geometrie des Kühlkörpers kann die Kühlleistung an den entsprechenden Stellen des Pulverkuchens eingestellt werden.

Der Kühlkörper kann verschiedenste geometrische Formen aufweisen. Beispielsweise ist der Kühlkörper zylinder-, torus-, pyramiden-, kreiszylinder-, kegel-, kugel-, quader- oder würfelförmig oder ein verknotetes Objekt. In einer Ausführungsform verbreitert sich der Zylinder zu einem oder beiden Enden hin trichterförmig. Hierdurch soll in einer (nahezu) senkrechte Position eine erhöhte Standfestigkeit bzw. ein verbessertes Einfüllen des Kühlmittels realisiert werden. Vorzugsweise ist der Kühlkörper nach unten hin verschlossen, so dass dieser beispielsweise ein flüssiges Kühlmittel aufnehmen kann. Der Kühlkörper kann teilweise oder vollständig verschlossen sein oder mindestens einen Einlass zum Einfüllen der Kühlflüssigkeit aufweisen. Vorzuweise verfügt der Kühlkörper über mindestens einen Ein- und mindestens einen Auslass, um das Kühlmittel im Kreislauf zirkulieren zu lassen. An den Ein- und Auslässen können Schläuche für den Transport des Kühlmittels vorgesehen sein.

Ebenfalls Gegenstand der vorliegenden Erfindung sind Verfahren zur schichtweisen Herstellung von dreidimensionalen Objekten, wobei das Verfahren folgende Schritte umfasst:
Zunächst werden das mindestens eine Objekt (15) und der mindestens eine Kühlkörper (21) durch das Verfestigen von Polymerpulver gleichzeitig hergestellt. Anschließend wird der Kühlkörper mit einem Kühlmittel während oder nach Abschluss des Bauvorgangs befüllt, wobei der Kühlkörper die umliegenden Bereiche des Pulverkuchens abkühlt. In einer bevorzugten Ausführungsform wird das Pulver beispielsweise durch Absaugen aus dem Innenbereich des Kühlkörpers entfernt, bevor der Kühlkörper mit einem Kühlmittel befüllt wird. Durch das Einbringen des Kühlmittels in den Kühlkörper wird das außerhalb des Kühlkörpers befindliche Pulver des Pulverkuchens nicht mit Kühlmittel kontaminiert. Das Kühlmittel kann einmalig in den Kühlkörper eingefüllt werden und dort verbleiben oder ständig bzw. regelmäßig erneuert werden. Alternativ besteht die Möglichkeit, das Kühlmittel in einem Kreislauf einzusetzen und
extern (außerhalb des Kühlkörpers) zu kühlen. Die Möglichkeiten können auch miteinander kombiniert werden.

Der oder die Kühlkörper können derart gestaltet, positioniert und orientiert werden, dass die dadurch resultierend Kühlleistung zu der gewünschten Temperaturverteilung während des Abkühlvorganges im Pulverkuchen führt. Der oder die Kühlkörper können so gestaltet werden, dass zur Optimierung der Kühlleistung ein oder mehrere Zu- und/oder Auslässe vorhanden sind. Das Kühlmittel kann aus gas-, flüssig- und festförmigen Stoffen bestehen oder aus Mischungen dieser Stoffe, wobei reaktionsträge, insbesondere inerte Stoffe bevorzugt sind. Bevorzugt sind gasförmige und/oder flüssige Kühlmittel. Beispielsweise geeignet sind Luft, Stickstoff, Argon, Wasser oder Wassergemische, hochsiedende organische Lösemittel, Öle oder Metalle wie Kupfer oder ein Stahl. Die Wassergemische können Tenside enthalten. Geeignete Öle sind Silikonöle. Hochsiedende organische Lösemittel weisen einen Siedepunkt von über 100 °C auf. Bevorzugt ist der Siedepunkt höher als 150 °C, besonders bevorzugt höher als 200 °C und ganz besonders bevorzugt höher als 250 °C. Geeignet ist beispielsweise Dibenzyltoluol, welches unter dem Handelsnamen Marlotherm SH der Fa. Sasol Germany GmbH erhältlich ist.

Die Temperatur und die Stoffeigenschaften des Kühlmittels sind so zu wählen, dass die gewünschte Temperaturverteilung während des Abkühlvorganges im Pulverkuchen erreicht wird. Das Kühlmittel kann dabei die Wärme mittels Wärmeleitung, Konvektion, Wärmestrahlung oder auch Siedekühlung abführen.

Der Abkühlvorgang kann inner- und außerhalb der Vorrichtung (1) erfolgen. Es ist auch möglich, den Abkühlvorgang in einer temperierten externen Kammer vorzunehmen.

Im Folgenden wird die schichtweise Herstellung von dreidimensionalen Objekten beschrieben, ohne dass die Erfindung darauf beschränkt werden soll.

Grundsätzlich eignen sich alle dem Fachmann bekannten Polymerpulver für den Einsatz in der erfindungsgemäßen Vorrichtung (1) bzw. des erfindungsgemäßen Verfahrens. Geeignet sind insbesondere Thermoplaste und Thermoelaste wie beispielsweise Polyethylen (PE, HDPE, LDPE), Polypropylen (PP), Polyamide, Polyester, Polyesterester, Polyetherester, Polyphenylenether, Polyacetale, Polyalkylenterephthalate, insbesondere Polyethylenterephthalat (PET) und Polybutylenterephthalat (PBT), Polymethylmethacrylat (PMMA), Polyvinylacetal, Polyvinylchlorid (PVC), Polyphenylenoxid (PPO), Polyoxymethylen (POM), Polystyrol (PS), Acrylnitril-Butadien-Styrol (ABS), Polycarbonate (PC), Polyethersulfone, thermoplastische Polyurethane (TPU), Polyaryletherketone, insbesondere Polyetheretherketon (PEEK), Polyetherketonketon (PEKK), Polyetherketon (PEK), Polyetheretherketonketon (PEEKK), Polyaryletheretheretherketon (PEEEK) oder Polyetherketonetherketonketon (PEKEKK), Polyetherimide (PEI), Polyarylensulfide, insbesondere Polyphenylensulfid (PPS), thermoplastische Polyimide (PI), Polyamidimide (PAI), Polyvinylidenfluoride, sowie Copolymere dieser Thermoplaste wie z.B. ein Polyaryletherketon (PAEK) / Polyarylethersulfon (PAES)-Copolymer, Mischungen und/oder Polymerblends. Insbesondere bevorzugt umfasst das Polymerpulver mindestens ein Polyamid oder Polyetherketone, insbesondere Polyamid 12, Polyamid 6, Polyamid 6.6 oder PEEK, wobei die genannten Polyamide besonders bevorzugt sind.

Im Betrieb werden zunächst in der Regel in einem Rechner aufgrund eines Konstruktionsprogramms oder dergleichen Daten über die Form des herzustellenden Objekts (15) erstellt bzw. abgespeichert. Diese Daten werden für die Herstellung des Objekts (15) so aufbereitet, dass das Objekt (15) in eine Vielzahl von horizontalen, im Vergleich zur Objektdimension dünnen Schichten zerlegt wird, und die Formdaten beispielsweise als Datensätze, z. B. als CAD-Daten, für jede dieser Schichten bereitgestellt werden. Die Erstellung und Aufbereitung der Daten für jede Schicht kann dabei vor der Herstellung oder auch gleichzeitig mit der Herstellung jeder Schicht erfolgen.

Anschließend wird zunächst die Bauplattform (16) mittels der Höheneinstellvorrichtung in die höchste Stellung gefahren, in der die Oberfläche der Bauplattform (16) in einer Ebene mit der Oberfläche des Bauraumes liegt, und anschließend um den Betrag der vorgesehenen Dicke der ersten Materialschicht abgesenkt, so dass innerhalb des entstehenden Ausschnitts ein abgesenkter Bereich gebildet ist, der seitlich von den Wänden des Ausschnitts und unten von der Oberfläche der Bauplattform (16) begrenzt ist. Mittels der Aufbringvorrichtung (17), beispielsweise in Form eines rotierenden Zylinders, wird sodann eine erste Schicht des zu verfestigenden Materials mit der vorgesehenen Schichtdicke (einfache Schicktdicke) in den vom Ausschnitt und der Bauplattform (16) gebildeten Hohlraum bzw. den abgesenkten Bereich eingebracht und gegebenenfalls von einer Heizung auf eine geeignete Arbeitstemperatur, beispielsweise 100 °C bis 360 °C, vorzugsweise 120 °C bis 200 °C, erwärmt. Derartige Heizungen sind dem Fachmann geläufig. Daraufhin steuert die Steuereinheit (13) die Ablenkeinrichtung derart, dass der abgelenkte Lichtstrahl (12) nacheinander an allen Stellen der Schicht auftrifft und dort das Material sintert bzw. aufschmilzt. Auf diese Weise kann zunächst eine feste Bodenschicht gebildet werden. In einem zweiten Schritt wird die Bauplattform (16) mittels der Höheneinstellvorrichtung um den Betrag einer üblicherweise einfachen Schichtdicke abgesenkt. Mittels der Aufbringvorrichtung (17) wird in den damit entstehenden abgesenkten Bereich innerhalb des Ausschnittes eine zweite Materialschicht eingebracht und ggf. wiederum von der Heizung erwärmt.

In einer Ausführungsform kann die Ablenkeinrichtung diesmal von der Steuereinheit (13) derart gesteuert werden, dass der abgelenkte Lichtstrahl (12) nur auf dem an die Innenfläche des Ausschnittes angrenzenden Bereich der Materialschicht auftrifft und dort die Materialschicht durch Sintern verfestigt, wodurch eine erste ringförmige Wandschicht mit einer Wandstärke von etwa 2 bis 10 mm entsteht, die das verbleibende pulverförmige Material der Schicht vollständig umgibt. Dieser Teil der Steuerung stellt damit eine Einrichtung zum Erzeugen einer das zu bildende Objekt (15) umgebenden Behälterwand gleichzeitig mit der Bildung des Objekts (15) in jeder Schicht dar.

Nach Absenken der Bauplattform (16) um den Betrag der (bspw. einfachen) Schichtdicke der nächsten Schicht, Aufbringen des Materials und Aufheizen in der gleichen Weise wie oben beschrieben kann nun die Herstellung des Objekts (15) und des Kühlelements (21) selbst beginnen. Hierzu steuert die Steuereinheit (13) die Ablenkeinrichtung derart, dass der abgelenkte Lichtstrahl (12) an solchen Stellen der Schicht auftrifft, die entsprechend den in der Steuereinheit gespeicherten Koordinaten des herzustellenden Objekts (15) und des Kühlelements (21) verfestigt werden sollen. Bei den weiteren Schichten wird analog vorgegangen. Im Falle der gewünschten Herstellung eines ringförmigen Wandbereichs in Form einer Behälterwand, die das Objekt (15) zusammen mit dem verbleibenden, nicht gesinterten Material umschließt und so beim Absenken der Bauplattform (16) unter den Arbeitstisch ein Austreten des Materials verhindert, wird bei jeder Objektschicht mittels der Einrichtung eine ringförmige Wandschicht auf die darunterliegende ringförmige Wandschicht aufgesintert. Auf die Erstellung der Wand kann verzichtet werden, wenn ein Wechselbehälter entsprechend EP 1037739 oder ein fest eingebauter Behälter verwendet wird.

Nach Abkühlung kann das gebildete Objekt (15) aus der Vorrichtung (1) entnommen werden. Zur Temperaturmessung im gebildeten Objekt oder an dessen Oberfläche können geeignete Berührungs- und berührungslos messende Thermometer eingesetzt werden.

Die mit den erfindungsgemäßen Verfahren hergestellten Objekte (15) sind ebenfalls Gegenstand der vorliegenden Erfindung.

Auch ohne weitere Ausführungen wird davon ausgegangen, dass ein Fachmann die obige Beschreibung im weitesten Umfang nutzen kann. Die bevorzugten Ausführungsformen und Beispiele sind deswegen lediglich als beschreibende, keinesfalls als in irgendeiner Weise limitierende Offenbarung aufzufassen.

Nachfolgend wird die vorliegende Erfindung anhand von Beispielen näher erläutert. Alternative Ausführungsformen der vorliegenden Erfindung sind in analoger Weise erhältlich.

### Beispiele:

Die Beispiele werden, wenn nicht anders angegeben, der folgenden Beschreibung entsprechend bearbeitet. Die Versuche werden auf einer Vorrichtung EOSINT P380 der Fa.
EOS GmbH, Deutschland, durchgeführt. Die Schichtstärke beträgt 0,15mm. Die Bauplattform wird um 3mm abgesenkt und es wird 3mm Pulver aufgetragen. Die Baukammer wird innerhalb von 120 min auf die Prozesstemperatur aufgeheizt. Die Verteilung der Temperatur im Bauraum ist nicht immer homogen, daher wird die mittels des eingebauten Pyrometers der Vorrichtung gemessene Temperatur als Bauraum-/Prozesstemperatur definiert. Die Prozesstemperatur beträgt 175°C und die Entnahmekammertemperatur beträgt 130°C. Vor der ersten Belichtung werden 80 Schichten Pulver aufgetragen. Aus einem Laser (11) wird der Laserstrahl (12) mittels eines Scansystems (13) durch die Linse (18) auf die temperierte und inertisierte (N₂) Baufeldebene (14) gelenkt. Die Linse wird als F-Theta Linsensystem ausgeführt, um einen möglichst homogenen Fokus über der gesamten Baufeldebene zu gewährleisten.

Es werden insgesamt 12 Objekte gebaut, wobei jeweils eine Gruppe von 4 Objekten auf einer

Höhe positioniert wird. Der Abstand zwischen den einzelnen Objekten einer Gruppe beträgt 100mm. Die Objekte einer Gruppe haben alle den gleichen Abstand zur Mitte des Baufeldes. Der Höhenabstand zwischen den Gruppen beträgt jeweils 50mm. Bei den Formkörpern handelt es sich um Würfel mit einer Kantenlänge von je 50mm. Nach Abschluss der Belichtung werden noch 100 weitere Schichten aufgetragen, bevor die Heizelemente im Bauraum und Entnahmekammer ausgeschaltet und die Abkühlphase eingeleitet wird. Die Zeit, die jeweils für eine Schicht benötigt wird, liegt während des gesamten Bauprozesses unter 55 s.

In der Abkühlphase wird in der Mitte und den Ecken (Abstand zu den anliegenden Rändern des Baufeldes beträgt 30mm) des Baufeldes ein PT100-Temperaturfühler, Firma Newport Electronics GmbH, Deutschland, von oben 140mm tief in den Pulverkuchen gesteckt, um die dort vorliegende Temperatur zu messen.

### Beispiel 1 (nicht erfindungsgemäß):

Verarbeitet wird ein PA12-Pulver mit den Pulverkennwerten aus Tabelle 1. Die Belichtungsparameter sind: Laserleistung 19,0 W, Scangeschwindigkeit 1100 mm/s, Abstand Belichtungslinien 0,3 mm. Die Abkühlung des Pulverkuchens erfolgt innerhalb der Maschine. In der Tabelle 2 ist der Temperaturverlauf nach dem Ende des Bauprozesses aufgeführt.

### Beispiel 2 (erfindungsgemäß)

Verarbeitet wird ein PA12-Pulver mit den Pulverkennwerten aus Tabelle 1. Die Belichtungsparameter sind: Laserleistung 19,0 W, Scangeschwindigkeit 1100 mm/s, Abstand Belichtungslinien 0,3 mm. Zusätzlich zu den 12 Objekten ist ein Kühlelement mitgebaut worden. Bei dem Kühlelement handelt es sich um einen Hohlzylinder mit einem Außendurchmesser von 14mm, einer Wandstärke von 1 mm und einer Höhe von 150mm. Der Zylinder wird etwas außerhalb der Mitte (Entfernung Mittelachse Hohlzylinder zum Mittelpunkt des Baufeldes beträgt 30mm) des Baufeldes positioniert. Nach Ende des Bauprozesses wird das Pulver aus dem Inneren des Zylinders entfernt. Der Kühlzylinder wird mit einem Volumenstrom von 7I/min temperierter Luft (23°C) gespült. Die Abkühlung des Pulverkuchens erfolgt innerhalb der Maschine. In der Tabelle 2 ist der Temperaturverlauf nach dem Ende des Bauprozesses aufgeführt.

### Beispiel 3 (erfindungsgemäß)

Verarbeitet wird ein PA12-Pulver mit den Pulverkennwerten aus Tabelle 1. Die Belichtungsparameter sind: Laserleistung 19,0 W, Scangeschwindigkeit 1100 mm/s, Abstand Belichtungslinien 0,3 mm. Zusätzlich zu den 12 Objekten ist ein Kühlelement mitgebaut worden. Bei dem Kühlelement handelt es sich um einen Hohlzylinder mit einem Außendurchmesser von 16mm, einer Wandstärke von 1 mm und einer Höhe von 150mm, wobei das untere Ende des Hohlzylinders geschlossen ist. Das obere Ende des Hohlzylinders ist trichterförmig ausgeführt (Trichterdurchmesser 25mm, Trichterhöhe 30mm). Das Kühlelement wird etwas außerhalb der Mitte (Entfernung Mittelachse Hohlzylinder zum Mittelpunkt des Baufeldes beträgt 20mm) des Baufeldes positioniert. Nach Ende des Bauprozesses wird das Pulver aus dem Inneren des Zylinders entfernt. Der Zylinder wird vollständig mit Marlotherm SH (23°C) gefüllt. Die Abkühlung des Pulverkuchens erfolgt innerhalb der Maschine. In der Tabelle 2 ist der Temperaturverlauf nach dem Ende des Bauprozesses aufgeführt.

In dem nicht erfindungsgemäßen Beispiel 1 ist zu erkennen, dass die Mitte des Pulverkuchens deutlich langsamer abkühlt als die Ränder. In den erfindungsgemäßen Beispielen ist die Differenz zwischen den Temperaturen am Rand und in der Mitte deutlich geringer, so dass der Pulverkuchen gleichmäßiger abkühlt. Dadurch wird der Verzug der herzustellenden dreidimensionalen Objekte reduziert und die dreidimensionalen Objekte können insgesamt auch früher ausgebaut werden.

**Tabelle 1: Pulverkennwerte**

| | **Wert** | **Einheit** | **Prüfart/Prüfgerät/Prüfparameter** |
|---|---|---|---|
| Polymer | Polyamid 12 | | |
| Schüttdichte | 0,456 | g/cm³ | DIN EN ISO 60 |
| Korngröße d50 | 56 | µm | Malvern Mastersizer 2000, Trockenmessung, 20-40g Pulver mittels Scirocco Trockendispergiergerät zudosiert. Zuführrate Rüttelrinne 70%, Dispergierluftdruck 3 bar. Die Messzeit der Probe 5 Sekunden (5000 Einzelmessungen), Brechungsindex und Blaulichtwert mit 1,52 festgelegt. Auswertung über Mie-Theorie |
| Korngröße d10 | 41 | µm | Malvern Mastersizer 2000, Parameter siehe Korngröße d50 |
| Korngröße d90 | 78 | µm | Malvern Mastersizer 2000, Parameter siehe Korngröße d50 |
| <10,48µm | 1,8 | % | Malvern Mastersizer 2000, Parameter siehe Korngröße d50 |
| Fließfähigkeit | 27 | s | DIN EN ISO 6186, Verfahren A, Durchmesser Düsenauslauf 15mm |
| Lösungsviskosität | 1,61 | - | ISO 307, Schott AVS Pro, Lösemittel *m-*Kresol sauer, Volumetrisches Verfahren, Doppelbestimmung, Lösetemperatur 100°C, Lösezeit 2h, Polymerkonzentration 5g/l Messtemperatur 25°C |
| BET (spez. Oberfläche) | 7,2 | m²/g | ISO 9277, Micromeritics TriStar 3000, Gasadsorption von Stickstoff, diskontinuierlichen volumetrischen Verfahren, 7 Messpunkte bei Relativdrücken P/P0 zwischen ca. 0,05 und ca. 0,20, Kalibrierung des Totvolumens mittels He(99,996 %), Probenvorbereitung 1 h bei 23°C + 16 h bei 80°C unter Vakuum, spez. Oberfläche auf die entgaste Probe bezogen, Auswertung erfolgte mittels Mehrpunktbestimmung |
| Schmelzpunkt 1. Aufheizung | 186 | °C | DIN 53765 DSC 7 v. Perkin Elmer Heiz-/Kühlrate 20K/min |
| Rekristallisationstemperatur | 139 | °C | DIN 53765 DSC 7 v. Perkin Elmer Heiz-/Kühlrate 20K/min |
| Materialkonditionierung | Material wird vor Verarbeitung/Analyse 24h bei 23°C und 50% Luftfeuchtigkeit gelagert | | |

**Tabelle 2: Temperatur [°C] in Abhängigkeit von Messposition und Abkühlzeit**

| Abkühlzeit | 0,1h | | 1h | | 5h | | 10h | | 20h | |
|---|---|---|---|---|---|---|---|---|---|---|
| Messposition | Mitte | Rand | Mitte | Rand | Mitte | Rand | Mitte | Rand | Mitte | Rand |
| Beispiel 1 | 169 | 146 | 166 | 136 | 162 | 99 | 154 | 74 | 125 | 39 |
| Beispiel 2 | 166 | 145 | 158 | 137 | 149 | 99 | 135 | 74 | 76 | 38 |
| Beispiel 3 | 167 | 146 | 163 | 137 | 148 | 98 | 136 | 74 | 78 | 37 |

## Patentansprüche

1. Vorrichtung (1) zur schichtweisen Herstellung von dreidimensionalen Objekten umfassend einen Bauraum (20) mit einer höheneinstellbaren Bauplattform (16), einer Vorrichtung (17) zum Aufbringen einer Schicht eines durch Einwirkung elektromagnetischer Strahlung verfestigbaren Materials auf die Bauplattform (16), einer Bestrahlungseinrichtung umfassend eine elektromagnetische Strahlung emittierende Strahlungsquelle (11), eine Steuerungseinheit (13) und eine im Strahlengang der elektromagnetischen Strahlung befindliche Linse (18) zum Bestrahlen von dem mindestens einen Objekt (15) entsprechenden Stellen der Schicht, **dadurch gekennzeichnet, dass** mindestens ein Kühlelement (21) gleichzeitig mit dem Objekt (15) herstellbar ist.

2. Vorrichtung (1) gemäß Anspruch 1, **dadurch gekennzeichnet, dass** das mindestens eine Kühlelement (21) in den Pulverkuchen (23) integriert wird.

3. Vorrichtung (1) nach einem der vorherigen Ansprüche, **dadurch gekennzeichnet, dass** das mindestens eine Kühlelement (21) ein Hohlkörper ist.

4. Vorrichtung (1) nach einem der vorherigen Ansprüche, **dadurch gekennzeichnet, dass** das mindestens eine Kühlelement (21) ein Kühlmittel enthält.

5. Vorrichtung (1) nach Anspruch 4, **dadurch gekennzeichnet, dass** das Kühlmittel fest, flüssig oder gasförmig ist.

6. Vorrichtung (1) nach Anspruch 4 oder 5, **dadurch gekennzeichnet, dass** das Kühlelement (21) 5 bis 100 mm von dem Objekt (15) entfernt ist.

7. Vorrichtung nach einem der vorherigen Ansprüche, **dadurch gekennzeichnet, dass** das Kühlelement verschlossen ist.

8. Vorrichtung nach einem der Ansprüche 1 bis 6, **dadurch gekennzeichnet**, das das Kühlelement einen Einlass zum Einfüllen der Kühlflüssigkeit aufweist.

9. Vorrichtung nach einem der vorherigen Ansprüche, **dadurch gekennzeichnet, dass** der Kühlkörper zylinder-, torus-, pyramiden-, kreiszylinder-, kegel-, kugel-, quader- oder würfelförmig oder ein verknotetes Objekt ist.

10. Verfahren zur schichtweisen Herstellung von dreidimensionalen Objekten in einer Vorrichtung (1) gemäß einem der vorherigen Ansprüche, **dadurch gekennzeichnet, dass** mindestens ein Objekt (15) und mindestens ein Kühlkörper (21) gleichzeitig hergestellt werden.

11. Verfahren nach Anspruch 10, **dadurch gekennzeichnet, dass** nach Abschluss der Herstellung des mindestens einen Kühlkörpers (21) das nicht verfestigte Material innerhalb des Kühlkörpers (21) entfernt wird.

12. Verfahren nach Anspruch 10 oder 11, **dadurch gekennzeichnet, dass** nach Abschluss der Herstellung des mindestens einen Kühlkörpers (21) ein Kühlmittel in den mindestens einen Kühlkörper (21) gefüllt wird.

13. Objekte (15), hergestellt nach einem Verfahren gemäß einem oder mehreren der Ansprüche 10 bis 12.
